# EUROPEAN PATENT APPLICATION

(11) **EP 4 606 733 A1**
(43) Date of publication of application: **27.08.2025**
(21) Application number: 23885603.3
(22) Date of filing: 25.10.2023
(51) Int. Cl.: B65G 1/00, B60B 33/00

(54) **SYSTEM FOR MOVING DISABLED TRANSPORT VEHICLE**

(30) Priority: 01.11.2022 JP 2022175652
(71) Applicant: Daifuku Co., Ltd., Osaka-shi, Osaka 555-0012 (JP)
(72) Inventor: IWATA Masashige, Gamo-gun, Shiga 529-1692 (JP); KIMURA Kazunari, Gamo-gun, Shiga 529-1692 (JP); HORIE Satoshi, Gamo-gun, Shiga 529-1692 (JP)
(74) Representative: Grosse Schumacher Knauer von Hirschhausen
(86) International application number: PCT/JP2023/038435
(87) International publication number: WO 2024/095845

(57) **Abstract**

At least one auxiliary wheel unit (20) includes a support frame (22), an auxiliary wheel (21) held by the support frame (22), and a fixing device (90) that fixes the support frame (22) to the vehicle body (10) in such a manner that the support frame (22) is detachable from the body (10). The support frame (22) includes a support surface (23) configured to come into contact with the bottom surface (17) of the vehicle body (10) from the below side (V2). The dimension (U) in the vertical direction (V) between the support surface (23) and the lower end of the auxiliary wheel (21) is smaller than the distance (D 1) in the vertical direction (V) between the bottom surface (17) of a vehicle body (10) and a travel surface (99) with a drive wheel (11a) in a normal ground-contact state in which the position of the drive wheel (11a) has not been raised by a raising device, and is also greater than the distance in the vertical direction (V) between the bottom surface (17) of the vehicle body (10) and the travel surface (99) with the drive wheel (11a) in a raised state in which at least one auxiliary wheel unit (20) has been detached from the vehicle body (10) and the position of the drive wheel (11a) is raised by the raising device.

## Description

### Technical Field

The present invention relates to a system for moving a disabled transport vehicle, the system including a transport vehicle that transports articles while traveling on a travel surface and an auxiliary wheel unit used when the transport vehicle becomes disabled.

### Background Art

An example of a transport vehicle that transports articles while traveling on a travel surface is disclosed in JP H11-59431A (Patent Document 1). In the following description of background art, the reference symbols used in Patent Document 1 are noted in parentheses. An unmanned transport vehicle (1), which is the transport vehicle in Patent Document 1, includes drive wheels (2) as well as auxiliary casters (4) and an elevation device (10) for raising and lowering the auxiliary casters (4). During normal travel, the auxiliary casters (4) are kept separated from the floor surface (5). However, when the unmanned transport vehicle (1) stops due to an abnormality, the elevation device (10) pushes down the auxiliary casters (4) to lift up the drive wheels (2) from the floor surface (5). As a result, if the unmanned transport vehicle (1) stops due to an abnormality and is unable to travel, the unmanned transport vehicle (1) can be towed by a towing vehicle (12) and moved off the travel route.

### Prior Art Document

### Patent Document

Patent Document 1: JP H11-59431A

### Disclosure of the Invention

### Problem to be Solved by the Invention

Since transport vehicles normally do not frequently become disabled, the auxiliary wheels (called auxiliary casters in Patent Document 1) provided for when a transport vehicle becomes disabled are normally not used very often. In this regard, with the technology of Patent Document 1, all transport vehicles need to be provided in advance with auxiliary casters, which are not used frequently, as well as an elevation device for raising and lowering the casters. Therefore, with the technology of Patent Document 1, the equipment cost tends to be high, particularly when there are a large number of transport vehicles.

In view of this, it is desirable to realize a system that can move a disabled transport vehicle while also suppressing an increase in the equipment cost.

### Means for Solving Problem

A system for moving a disabled transport vehicle according to an aspect of the present disclosure is a system for moving a disabled transport vehicle, including: a transport vehicle configured to travel on a travel surface and transport an article; and at least one auxiliary wheel unit configured to be used in a case where the transport vehicle becomes disabled, the transport vehicle including: a vehicle body; and a plurality of wheels configured to roll on the travel surface while supporting the vehicle body, at least one of the plurality of wheels being a drive wheel coupled to a drive shaft of a drive motor in such a manner as to rotate in conjunction with the drive shaft, the drive wheel being attached to the vehicle body via a suspension mechanism, the transport vehicle further including a raising device configured to raise a position of the drive wheel relative to the vehicle body, the at least one auxiliary wheel unit including: a support frame; an auxiliary wheel held by the support frame and rotatable relative to the support frame; and a fixing device configured to fix the support frame to the vehicle body in such a manner that the support frame is detachable from the body, the support frame including a support surface at a position above the auxiliary wheel, the support surface being configured to come into contact with a bottom surface of the vehicle body from below, and the support surface and a lower end of the auxiliary wheel being separated by a vertical dimension that is (i) smaller than a vertical distance between the bottom surface of the vehicle body and the travel surface with the drive wheel in a normal ground-contact state in which the position of the drive wheel is not raised by the raising device and (ii) greater than a vertical distance between the bottom surface of the vehicle body and the travel surface with the drive wheel in a raised state in which the at least one auxiliary wheel unit has been detached from the vehicle body and the position of the drive wheel is raised by the raising device.

With this configuration, even if the transport vehicle becomes unable to travel due to a malfunction of the drive motor or the like, the support frame having the support surface that abuts against the bottom surface of the vehicle body from below can be fixed to the vehicle body by the fixing device, and by raising the position of the drive wheel relative to the vehicle body with the raising device, it is possible to realize a state in which the drive wheel is lifted up from the travel surface and the auxiliary wheel held by the support frame is in contact with the ground. Therefore, even if the drive wheel cannot rotate due to a malfunction of the drive motor or the like, or if a large force is required to rotate the drive wheel, the drive wheel can be lifted up, thereby making it possible to move the transport vehicle relatively easily by force applied by an operator or by force applied by another towing vehicle, for example. Since it is possible to move the disabled transport vehicle in this manner, when there are a plurality of transport vehicles, it is possible to avoid the case where the disabled transport vehicle hinders the traveling of the other transport vehicles. Furthermore, with this configuration, the vertical dimension between the support surface of the support frame and the lower end of the auxiliary wheel is smaller than the vertical distance between the bottom surface of the vehicle body and the travel surface in the normal ground-contact state, and therefore the support frame that supports the auxiliary wheel can basically be attached to the vehicle body without lifting up the vehicle body with a jack or the like. Therefore, the support frame can be easily attached to the vehicle body.

Furthermore, according to the above configuration, the support frame can be attached to and detached from the vehicle body, and therefore the support frame that supports the auxiliary wheel may be attached to the transport vehicle only when the transport vehicle becomes disabled. Therefore, even if there are a plurality of transport vehicles, it is basically sufficient to provide the facility with fewer auxiliary wheel units than the number of transport vehicles, and the equipment cost can be lower than in the case where auxiliary wheels are attached to all transport vehicles in advance.

As described above, according to the above configuration, it is possible to realize a system that is capable of moving a disabled transport vehicle while also suppressing an increase in the equipment cost.

Further features and advantages of the system for moving a disabled transport vehicle will become apparent from the following description of the embodiments given with reference to the drawings.

### Brief Description of the Drawings

FIG. 1 is a plan view of a transport facility.
FIG. 2 is a front view of a container shelf.
FIG. 3 is a view in the width direction of a vehicle body of a transport vehicle.
FIG. 4 is a plan view showing a first posture and a second posture of a transfer device.
FIG. 5 is a diagram showing a structure of the vehicle body.
FIG. 6 is a diagram showing the structure of the vehicle body.
FIG. 7 shows a normal ground-contact state.
FIG. 8 is a diagram showing a drive wheel raised state.
FIG. 9 is a perspective view of an auxiliary wheel unit.
FIG. 10 is a diagram showing a state in which the vehicle body is lifted by an elevation device.

### Best Mode for Carrying out the Invention

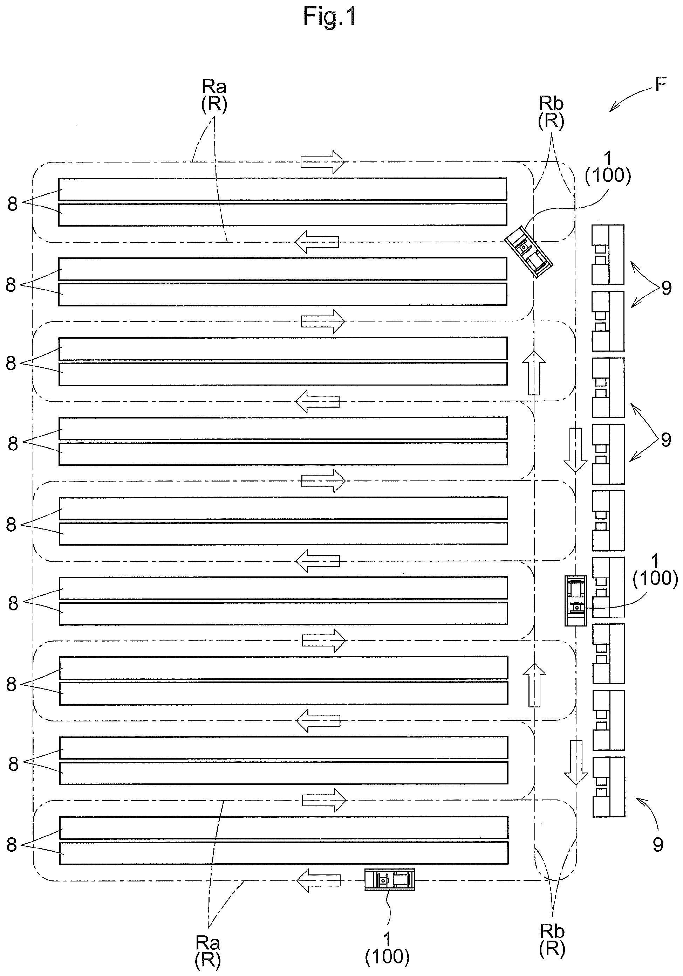

Embodiments of a system for moving a disabled transport vehicle (or defective transport vehicle) will be described below with reference to the drawings. Here, descriptions will be given for an example in which a system for moving a disabled transport vehicle according to the present disclosure is applied to a transport facility as illustrated in FIG. 1.

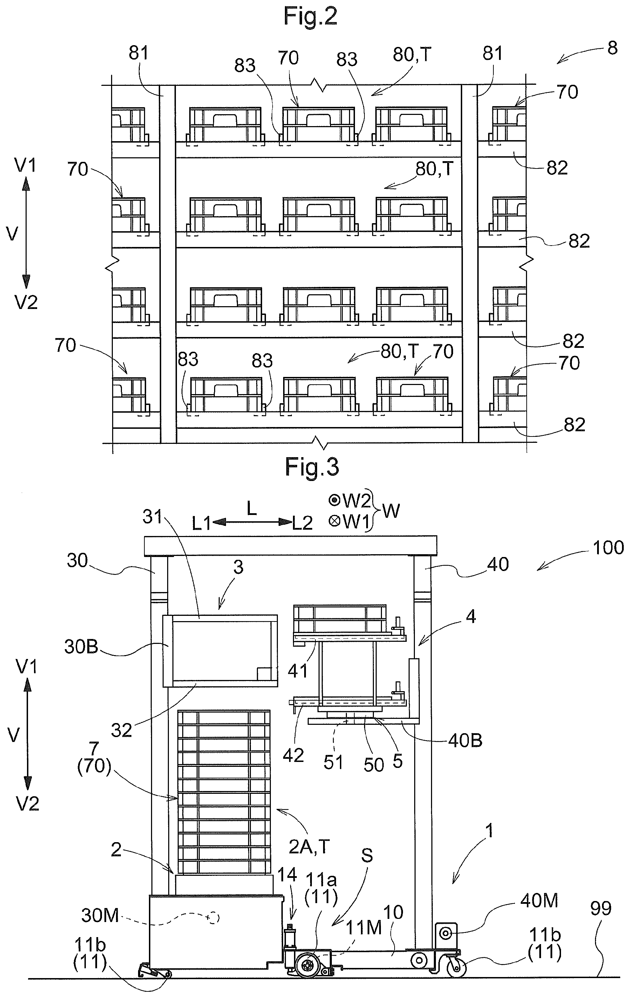

As shown in FIG. 1, a transport facility F includes container shelves 8 for storing containers 70 (see FIG. 2), loading/unloading sections 9 for loading and unloading the containers 70, and transport vehicles 100 for transporting the containers 70. In the present embodiment, the transport facility F includes a plurality of transport vehicles 100. The transport vehicles 100 are configured to transport the containers 70 loaded by the loading/unloading sections 9 to the container shelves 8, and transport the containers 70 stored on the container shelves 8 to the loading/unloading sections 9 for unloading. The containers 70 are one example of articles, and articles other than the containers 70 may be the transport target. In the present embodiment, the container 70 corresponds to the "article".

In the present embodiment, a plurality of container shelves 8 are arranged parallel to one another at specified intervals. Each of the container shelves 8 has at least an open front surface, and the containers 70 are inserted and removed through the open front surface. A travel route R for travel bodies 1 (the transport vehicles 100) is set such that a portion extends between each pair of adjacent container shelves 8 whose front surfaces face each other. Also, the container shelves 8 located at the ends of the rows of container shelves 8 provided in the transport facility F are arranged such that the front surface faces outward, and the travel route R is set such that a portion also extends in the area along the front surfaces of the container shelves 8 at the ends. Also, the transport facility F includes a plurality of the loading/unloading sections 9, and the travel route R is also set such that a portion extends in an area passing along the loading/unloading sections 9.

The travel route R includes inner routes Ra that extend along the front surfaces of the container shelves 8 in the direction in which the container shelves 8 extend, and outer routes Rb that are set outside the area in which the container shelves 8 are arranged. The inner routes Ra are set in correspondence with the container shelves 8. In the present embodiment, the inner routes Ra correspond to a portion of the travel route R set in the area between a pair of adjacent container shelves 8 whose front surfaces face each other, and a portion of the travel route R set in the area along the front surfaces of the container shelves 8 arranged such that the front surfaces face outward. Also, the outer routes Rb are set so as to connect the inner routes Ra to each other. Also, the outer routes Rb are set so as to pass along the loading/unloading sections 9. In the present embodiment, the outer routes Rb correspond to the portions of the travel route R other than the inner routes Ra.

As shown in FIG. 2, in each of the container shelves 8, a plurality of shelf sections 80 for storing the containers 70 therein are arranged next to each other in a vertical direction V. In the present embodiment, the container shelf 8 includes a plurality of beam members 82 extending in the horizontal direction along the front surface of the container shelf 8, and also includes a plurality of support members 81 extending along the vertical direction V and connected to the beam members 82.

The beam members 82 are spaced apart from each other in the vertical direction V. Placement members 83 for placement of the containers 70 thereon are connected to each of the beam members 82. In this example, a container 70 is stored on a shelf section 80 by being placed on a pair of the placement members 83. Also, a plurality of pairs of placement members 83 are arranged on each of the shelf sections 80, and therefore a plurality of containers 70 can be stored on each of the shelf sections 80.

The containers 70 are transport targets to be transported by the transport vehicles 100. Each of the containers 70 is shaped as a box with an opening on an above side V1. In this example, when viewed in the vertical direction V, the outer shape of the container 70 is rectangular. The container 70 is capable of storing specified contained items. Examples of the contained items include various commodities such as food and daily necessities, as well as parts and in-process articles used in a factory production line, for example.

In the present embodiment, the containers 70 are configured so as to be able to be stacked on another container 70 while storing a contained item. In other words, the containers 70 are configured to be stackable in the vertical direction V (see FIG. 3). In this example, two containers 70 are stacked in the vertical direction V by fitting the bottom of one container 70 into the opening of the other container 70 from the above side V1.

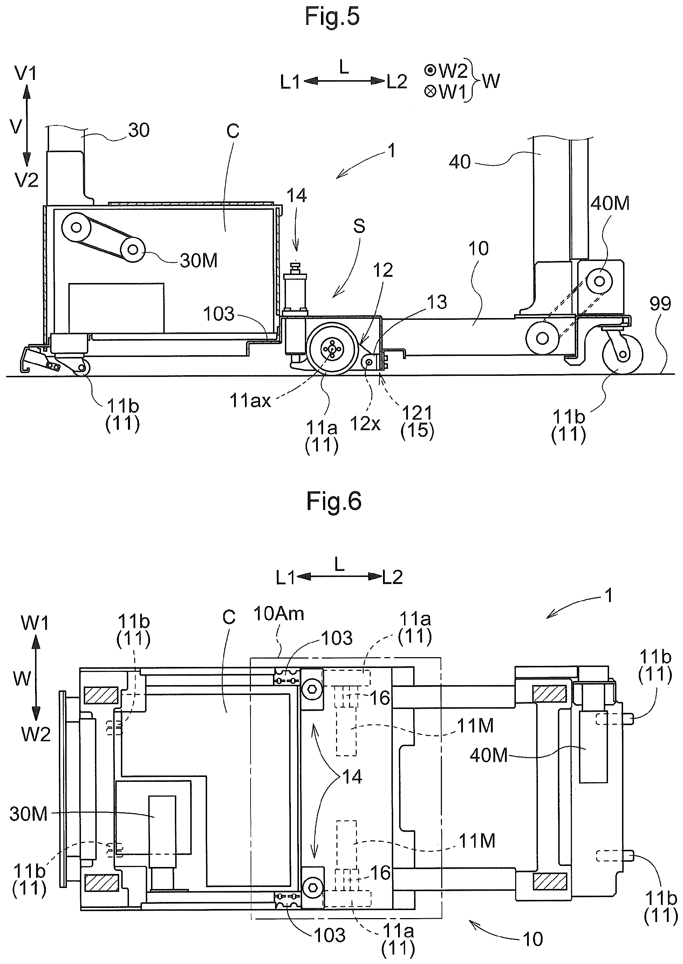

As shown in FIG. 3, each of the transport vehicles 100 includes a travel body 1 that travels on a travel surface 99. In other words, the transport vehicle 100 transports the container 70 while traveling on the travel surface 99. The travel surface 99 is formed, for example, by a floor surface. The travel body 1 travels along the predetermined travel route R (see FIG. 1). In the present embodiment, the transport vehicle 100 includes a container group support section 2 that supports a stack of containers 70 as a container group 7 in a specified stacking area 2A, a lifting device 3 that lifts the containers 70 in the container group 7 supported by the container group support section 2, and a transfer device 4 that transfers the containers 70. In the present embodiment, the transport vehicle 100 further includes a control device C (see FIGS. 5 and 6) that controls the travel body 1, the lifting device 3, and the transfer device 4. In addition to controlling the above devices, the control device C also controls the container group support section 2.

The container group support section 2, the lifting device 3, and the transfer device 4 are mounted on the travel body 1. The direction in which the transport vehicle 100 (specifically, the travel body 1) travels is defined as the "front-rear direction L of the vehicle body", and the container group support section 2 and the transfer device 4 are arranged on the travel body 1 so as to be next to each other in the front-rear direction L of the vehicle body. Here, one side in the front-rear direction L of the vehicle body is defined as a "first side L1 in the front-rear direction of the vehicle body", and the opposite side in the front-rear direction L of the vehicle body is defined as a "second side L2 in the front-rear direction of the vehicle body". Also, the direction orthogonal to the front-rear direction L of the vehicle body in a vertical direction V view along the vertical direction V is defined as a "width direction W of the vehicle body", one side in the width direction W of the vehicle body is defined as a "first side W1 in the width direction of the vehicle body ", and the other side in the width direction W of the vehicle body is defined as a "second side W2 in the width direction of the vehicle body". Here, the front-rear direction L of the vehicle body and the width direction W of the vehicle body are horizontal directions that are orthogonal to each other.

The container group support section 2 is configured to be able to support a stack of containers 70 as the container group 7. The stacking area 2A, in which the container groups 7 are arranged, is defined on the above side V1 of the container group support section 2. In this example, the container group support section 2 includes a conveyor capable of having the container group 7 placed thereon and moving the container group 7 in the width direction W of the vehicle body.

The container group 7 including the stack of containers 70 is loaded to the loading/unloading section 9 (see FIG. 1). While the travel body 1 is adjacent to the loading/unloading section 9, the container group support section 2 can receive a container group 7 from the loading/unloading section 9 and deliver a container group 7 to the loading/unloading section 9. Although not illustrated in detail, in this example, the loading/unloading section 9 is adjacent to a picking area where work is performed to remove contained items such as products from the containers 70. When the container group 7 is delivered from the container group support section 2 to the loading/unloading section 9, contained items are removed from the containers 70 in a picking area adjacent to the loading/unloading section 9. After some or all of the contained items stored in the containers 70 have been removed, the containers 70 are delivered from the loading/unloading section 9 to the container group support section 2 (transport vehicle 100) and transported again to one of the container shelves 8.

The lifting device 3 is configured to lift the containers 70 in the container group 7 supported by the container group support section 2. The lifting device 3 includes a lifting mast 30 provided upright on the above side V1 of the travel body 1, a lifting elevation body 30B connected to the lifting mast 30, lifting mechanisms (in this example, a first lifting mechanism 31 and a second lifting mechanism 32 described later) supported by the lifting elevation body 30B, and a lifting elevation body drive section 30M that raises and lowers the lifting elevation body 30B along the lifting mast 30. Although not illustrated in detail, the lifting elevation body drive section 30M includes, for example, a motor for rotating a rotating body around which an endless body such as a belt is wound.

In this example, the lifting device 3 includes the first lifting mechanism 31 that lifts a container 70 of any height in the container group 7 stack in the stacking area 2A so as to be lifted up from the container 70 adjacent to that container 70 on a below side V2, and the second lifting mechanism 32 that lifts the container 70 on the below side V2 of the container 70 lifted by the first lifting mechanism 31 so as to be lifted up from the container 70 adjacent to that container 70 on the below side V2. In the present embodiment, the first lifting mechanism 31 and the second lifting mechanism 32 are spaced apart from each other in the vertical direction V. This makes it possible to form a space in the vertical direction V between the container 70 lifted by the first lifting mechanism 31 and the container 70 lifted by the second lifting mechanism 32. It is possible to also form a space in the vertical direction V on the below side V2 of the container 70 lifted by the second lifting mechanism 32.

When a space is formed in the vertical direction V between the container 70 lifted by the first lifting mechanism 31 and the container 70 lifted by the second lifting mechanism 32, it is possible to unload another container 70 to that space. In other words, the transfer device 4 can stack another container 70 on the above side V1 of the container 70 lifted by the second lifting mechanism 32. Also, when a space is formed in the vertical direction V on the below side V2 of the container 70 lifted by the second lifting mechanism 32, that space can be used to scoop up the container 70 adjacent on the below side V2 of the container 70 lifted by the second lifting mechanism 32.

The transfer device 4 is configured to transfer a container 70 to a transfer target location T. The transfer device 4 is configured to perform an unloading operation for transferring a container 70 to the transfer target location T, and a scooping operation for scooping up a container 70 from the transfer target location T. Note that in this specification, the transfer of a container 70 from the transfer target location T to the transfer device 4 is defined as "scooping", and "scooping" is not limited to a specific transfer operation. In the present embodiment, examples of the transfer target location T include the stacking area 2A and a shelf section 80 of a container shelf 8.

As shown in FIG. 3, the transport vehicle 100 includes a transfer mast 40 that is fixed to the travel body 1 and extends along the vertical direction V, and a transfer elevation body 40B that moves up and down along the transfer mast 40. The transport vehicle 100 also includes a transfer elevation body drive section 40M that raises and lowers the transfer elevation body 40B along the transfer mast 40. The transfer device 4 is supported by the transfer elevation body 40B. Accordingly, the transport vehicle 100 can move the transfer device 4 in the vertical direction V, and can transfer a container 70 to the shelf section 80 at any level (see FIG. 3). In this example, the transfer device 4 includes a first transfer mechanism 41 and a second transfer mechanism 42 that is arranged on the below side V2 of the first transfer mechanism 41, and the transfer operation performed with the first transfer mechanism 41 and the transfer operation performed with the second transfer mechanism 42 can be performed in parallel. Although not illustrated in detail, the transfer elevation body drive section 40M includes, for example, a motor for rotating a rotating body around which an endless body such as a belt is wound.

Here, the direction of movement of a container 70 being transferred by the transfer device 4 is defined as a "transfer direction X". Moreover, one side in the transfer direction X is defined as an "unloading side X1 in the transfer direction", and the other side in the transfer direction X is defined as a "scooping side X2 in the transfer direction". In this example, the transfer direction X is a direction along the horizontal direction. The unloading side X1 in the transfer direction is the side toward which a container 70 moves in the transfer direction X when unloading the container 70. The scooping side X2 in the transfer direction is the side toward which a container 70 moves in the transfer direction X when scooping up the container 70. In this example, the transfer device 4 (here, the first transfer mechanism 41 and the second transfer mechanism 42, respectively) performs an unloading operation to transfer a container 70 to the transfer target location T by pushing the container 70 toward the unloading side X1 in the transfer direction with a pushing body (not shown), and performs a scooping operation to transfer a container 70 from the transfer target location T by engaging the container 70 with an engaging body (not shown) and pulling the container 70 toward the scooping side X2 in the transfer direction.

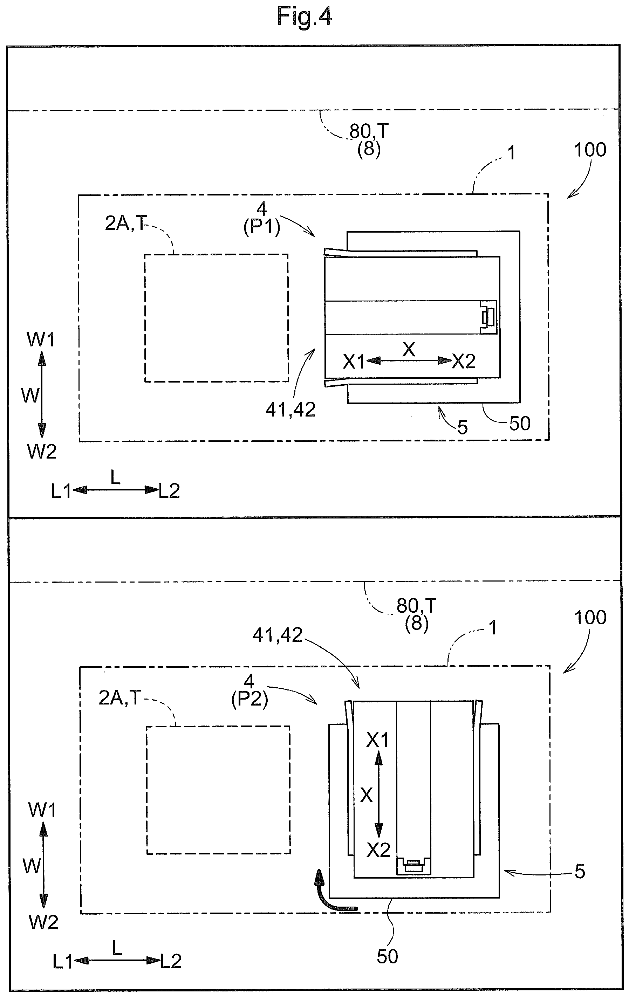

In the present embodiment, the transport vehicle 100 includes a turning device 5 that turns the transfer device 4 about an axis along the vertical direction V. As shown in FIG. 4, the turning device 5 is configured to turn the transfer device 4 (more specifically, a part of the transfer device 4) around an axis along the vertical direction V to change the posture of the transfer device 4 between a first posture P1 in which the unloading side X1 in the transfer direction faces the stacking area 2A, and a second posture P2 in which the unloading side X1 in the transfer direction faces a container shelf 8. In this manner, in the present embodiment, the transfer direction X can be changed within the horizontal plane by the turning device 5.

In the present embodiment, the transport vehicle 100 changes the posture of the transfer device 4 according to the position of the transfer target location T. Specifically, the transfer device 4 turns to the first posture P1 when the transfer target location T is the stacking area 2A, and turns to the second posture P2 when the transfer target location T is the container shelf 8 (shelf section 80). As shown in FIG. 3, in this example, the turning device 5 includes a turning table 50 that supports the transfer device 4, a turning shaft 51 that supports the turning table 50 so as to be able to turn relative to the transfer elevation body 40B, and a turning drive section (not shown) that drives the turning shaft 51.

As shown in FIGS. 5 and 6, the transport vehicle 100 includes the control device C that controls various devices. In the present embodiment, the control device C controls the travel body 1, the container group support section 2, the lifting device 3, the transfer device 4, and the turning device 5. The operations for supporting, transporting, and transferring the containers 70 are realized by the control device C controlling various devices. In this example, the control device C causes various devices to perform operations for supporting, transporting, and transferring the containers 70, based on detection results from various sensors. The control device C includes, for example, a processor such as a microcomputer, and peripheral circuits such as a memory. Various functions are realized by cooperation between such hardware and programs executed on the processor of a computer or the like.

As shown in FIGS. 5 and 6, the transport vehicle 100 (specifically, the travel body 1) includes the vehicle body 10 and a plurality of wheels 11 that roll on a travel surface 99 while supporting the vehicle body 10. As shown in FIG. 6, at least one of the wheels 11 is a drive wheel 11a that is coupled to a drive shaft 16 of a drive motor 11M so as to rotate in conjunction with the drive shaft 16. In the present embodiment, the transport vehicle 100 includes six wheels 11, two of which are drive wheels 11a and the remaining four of which are driven wheels 11b (non-drive wheels). As shown in FIG. 6, in this example, a pair of drive wheels 11a are provided next to each other in the width direction W of the vehicle body in a central region 10Am, which is a central region of the vehicle body 10 in the front-rear direction L of the vehicle body, and a pair of driven wheels 11b are provided next to each other in the width direction W of the vehicle body in each of two regions on opposite sides of the central region 10Am in the front-rear direction L of the vehicle body 10.

The pair of drive wheels 11a are driven to rotate by drive motors 11M at the same speed or different speeds. In the present embodiment, the pair of drive wheels 11a are each driven by a separate drive motor 11M. Also, cases where the pair of drive wheels 11a are driven to rotate at different speeds includes the case where one of the pair of drive wheels 11a is driven to rotate in the forward direction and the other is driven to rotate in the reverse direction. In other words, this includes the case where the pair of drive wheels 11a are driven to rotate in opposite directions. In the present embodiment, the direction along which the rotation axis 11ax of each of the drive wheels 11a extends is fixed to the width direction W of the vehicle body. On the other hand, the driven wheels 11b are supported by the vehicle body 10 so as to be rotatable about an axis along the vertical direction V. In other words, the direction along which the rotation axis of each of the driven wheels 11b extends can be changed within the horizontal plane. In this example, each of the driven wheels 11b is a caster.

In the present embodiment, by driving the pair of drive wheels 11a to rotate in opposite directions, the transport vehicle 100 can perform a so-called spin turn by turning the travel body 1 in place around an axis along the vertical direction V. However, the direction of travel of the travel body 1 can also be changed by a method other than a spin turn. For example, the transport vehicle 100 may change the direction of travel of the travel body 1 by stopping the rotation of one of the pair of drive wheels 11a and rotating the other, or may change the direction of travel of the travel body 1 by rotating the pair of drive wheels 11a in the same direction but at different rotational speeds.

The travel body 1 includes suspension mechanisms S for facilitating contact of the wheels 11 with the travel surface 99 and for absorbing vibration of the wheels 11 during traveling. The suspension mechanisms S is provided on the drive wheels 11a. In other words, the drive wheels 11a are attached to the vehicle body 10 via the suspension mechanisms S. In the present embodiment, the pair of drive wheels 11a are attached to the vehicle body 10 via separate suspension mechanisms S. In the present embodiment, the suspension mechanisms S are not provided on the driven wheels 11b.

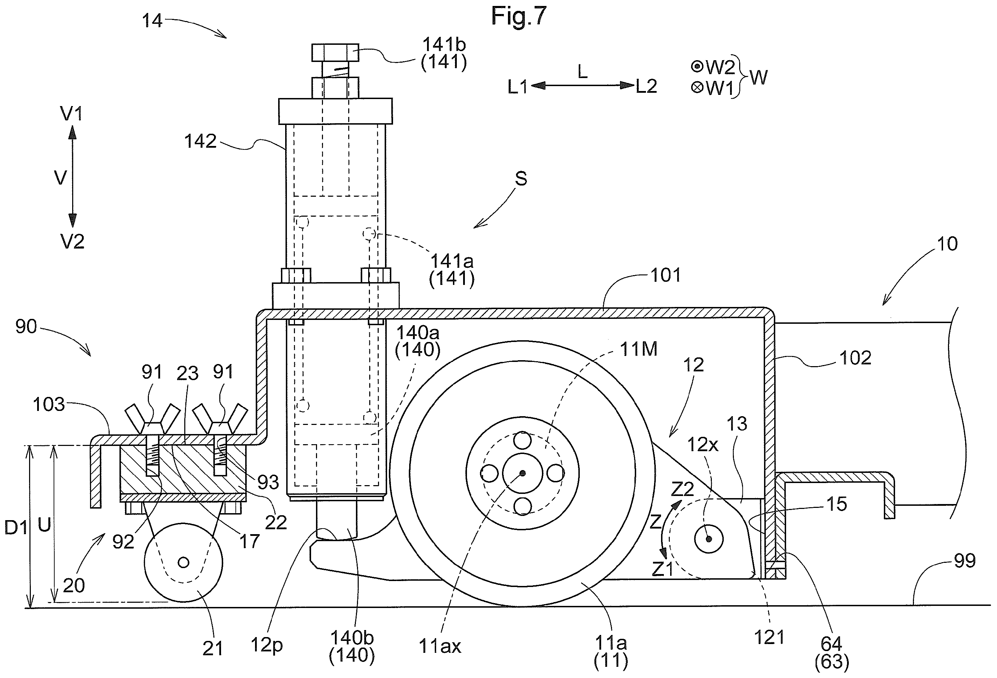

As shown in FIG. 7, each of the suspension mechanisms S includes a support arm 12 that is swingable relative to the vehicle body 10 and supports the drive wheel 11a, a swing support section 13 that is attached to the vehicle body 10 and supports a swing pivot 12x of the support arm 12, and an elastic unit 14 that applies a biasing force to the support arm 12 in a direction that biases the drive wheel 11a toward the below side V2. The support arm 12 rotatably supports the drive wheel 11a. In the present embodiment, the support arm 12 also supports the drive motor 11M.

In the following, the direction in which the support arm 12 swings is defined as a "swing direction Z", the side in the swing direction Z of the support arm 12 in which the drive wheel 11a moves toward the travel surface 99 is defined as a "first side Z1 in the swing direction", and the opposite side is defined as a "second side Z2 in the swing direction". In other words, the first side Z1 in the swing direction is the side toward which the drive wheel 11a moves toward the below side V2, and the second side Z2 in the swing direction is a side toward which the drive wheel 11a moves toward the above side V1.

The axis of the swing pivot 12x of the support arm 12, in other words, the swing axis of the support arm 12, is arranged parallel (parallel or substantially parallel) to the rotation axis 11ax of the drive wheel 11a. As a result, the support arm 12 swings to allow the drive wheel 11a to move up and down when the travel body 1 travels on an uneven travel surface 99. The swing pivot 12x of the support arm 12 is disposed at a position different from the rotation axis 11ax of the drive wheel 11a in the front-rear direction L of the vehicle body. Here, the swing pivot 12x of the support arm 12 is arranged on the second side L2 in the front-rear direction of the vehicle body relative to the rotation axis 11ax of the drive wheel 11a.

The swing support section 13 is a member that supports the swing pivot 12x of the support arm 12. In the present embodiment, the vehicle body 10 includes an upper surface section 101 facing the above side V1, and a hanging wall section 102 hanging down from the upper surface section 101 toward the below side V2. The upper surface section 101 is disposed on the above side V1 relative to the support arm 12 and the drive wheel 11a, and the hanging wall section 102 is disposed on the second side L2 in the front-rear direction of the vehicle body relative to the support arm 12 and the drive wheel 11a. The swing support section 13 is fixed to the hanging wall section 102. In this example, the swing support section 13 is fixed to the hanging wall section 102 in a state of abutting against the hanging wall section 102 from the first side L1 in the front-rear direction of the vehicle body. The swing support section 13 supports the swing pivot 12x of the support arm 12 on the first side L1 in the front-rear direction of the vehicle body relative to the hanging wall section 102.

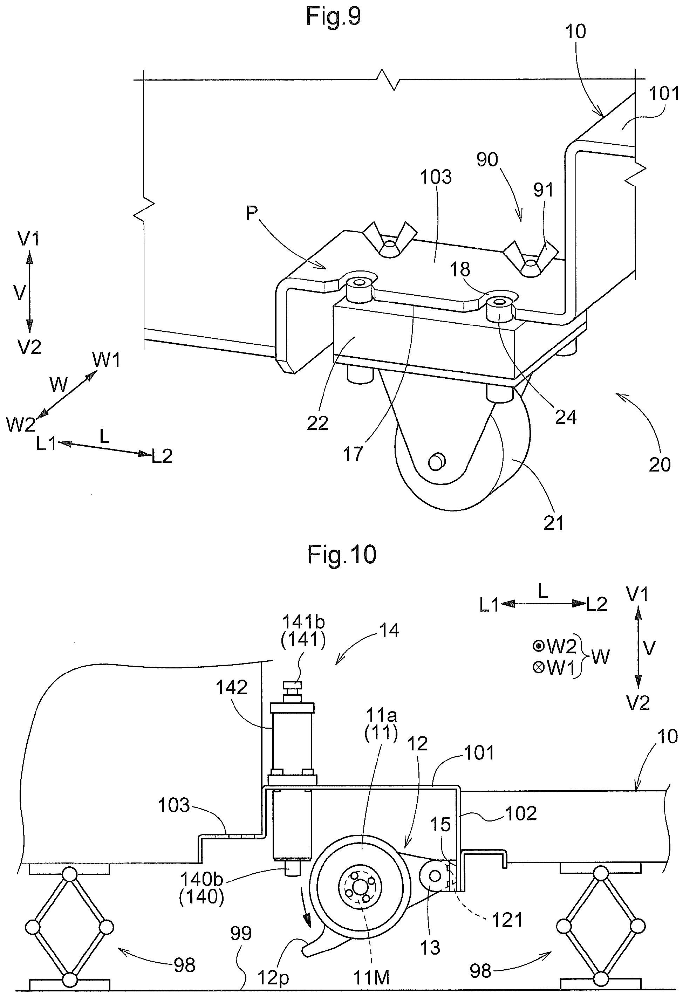

In the present embodiment, the suspension mechanism S includes a stopper 15 whose position relative to the vehicle body 10 is fixed. The stopper 15 restricts the swinging of the support arm 12 to a predetermined position in the direction of moving the drive wheel 11a toward the below side V2 (in other words, swing toward the first side Z1 in the swing direction). FIG. 10 shows a state in which the position of the support arm 12 is restricted by the stopper 15. Note that FIG. 10 shows a state in which the vehicle body 10 is lifted up by elevation devices 98 such as jacks. For example, when a drive wheel 11a and the corresponding support arm 12 are to be removed from the vehicle body 10, the vehicle body 10 is lifted in this manner. When the vehicle body 10 is lifted in this manner, the support arm 12 swings toward the first side Z1 in the swing direction due to the action of gravity, but by restricting the swinging of the support arm 12 with the stopper 15, the drive wheel 11a and the support arm 12 can be prevented from hanging down a large amount toward the below side V2. Therefore, the drive wheel 11a and the support arm 12 can be easily removed.

The stopper 15 is disposed at a position where it comes into contact with the support arm 12 when the support arm 12 swings toward the first side Z1 in the swing direction. The stopper 15 allows the support arm 12 to swing toward the first side Z1 in the swing direction up to a position where it comes into contact with the stopper 15, and prevents the support arm 12 from swinging beyond that position in the first side Z1 in the swing direction (see FIG. 10). In the present embodiment, a portion of the hanging wall section 102 constitutes the stopper 15, and the stopper 15 is positioned so as to come into contact with a portion of the support arm 12 on the second side L2 in the front-rear direction of the vehicle body (here, a pressing portion 121 described later) relative to the swing pivot 12x of the support arm 12 when the support arm 12 swings toward the first side Z1 in the swing direction.

As shown in FIG. 7, the elastic unit 14 includes an abutting section 140 that abuts, from the second side Z2 in the swing direction, against a target location 12p on the support arm 12 spaced apart from the swing pivot 12x, an elastic section 141 that biases the abutting section 140 abutted against the support arm 12 toward the first side Z1 in the swing direction, and a body section 142 that supports the abutting section 140 and the elastic section 141. The body section 142 is fixed to the vehicle body 10 (specifically, the upper surface section 101). While the drive wheel 11a is supporting at least a portion of the weight of the travel body 1, the abutting portion 140 biased by the elastic section 141 abuts against the support arm 12, thereby pressing the drive wheel 11a supported by the support arm 12 toward the travel surface 99, and bringing the drive wheel 11a into contact with the travel surface 99. Therefore, the drive wheel 11a is prevented from lifting up from the travel surface 99 and spinning.

In the present embodiment, the target location 12p is set on the support arm 12 on the side of the rotation axis 11ax of the drive wheel 11a opposite to the swing pivot 12x side in the front-rear direction L of the vehicle body. Here, the target location 12p is set on the support arm 12 on the first side L1 in the front-rear direction of the vehicle body relative to the rotation axis 11ax of the drive wheel 11a. Also, in the present embodiment, the target location 12p is set on the surface of the support arm 12 facing the above side V1. The abutting section 140 is provided so as to abut against the target location 12p from the above side V1, and the elastic section 141 is provided so as to bias the abutting section 140 toward the below side V2.

The body section 142 has a tubular housing chamber, and the abutting section 140 has a piston section 140a that is formed in a piston shape and can move in the vertical direction V inside the housing chamber, and a projection 140b formed to extend from the piston section 140a to the below side V2 and arranged to project from the lower end of the housing chamber to the below side V2. In this example, the lower end portion of the projection 140b abuts against the target location 12p of the support arm 12 from the above side V1.

The elastic section 141 is configured to bias the piston section 140a toward the below side V2. In this example, the elastic section 141 includes a spring member 141a that is housed in the housing chamber of the body section 142 and biases the piston section 140a. Here, the spring member 141a is a compression coil spring arranged between the upper wall of the housing chamber and the piston section 140a in the vertical direction V. In the present embodiment, the elastic section 141 includes an adjustment section 141b for adjusting the elastic force of the spring member 141a. In this example, by tightening a bolt that constitutes the adjustment section 141b, the compression amount of the compression coil spring serving as the spring member 141a can be increased, thereby increasing the elastic force. Conversely, by loosening the bolt constituting the adjustment section 141b, the amount of compression of the compression coil spring serving as the spring member 141a can be reduced, thereby reducing the elastic force.

Incidentally, a malfunction of the transport vehicle 100 (e.g., a malfunction of the drive motor 11M) may cause the drive wheel 11a to not rotate or cause a large force to be required to rotate the drive wheel 11a. For example, if a negative brake (e.g., a de-energization brake) that does not perform braking while receiving power is provided in the power transmission mechanism between the drive motor 11M and the drive wheel 11a, when a malfunction of the transport vehicle 100 occurs and the supply of operating power is cut off, the drive wheel 11a does not rotate. According to the system for moving a disabled transport vehicle of the present disclosure, even if the drive wheel 11a cannot rotate or a large force is required to rotate the drive wheel 11a, as described below, the drive wheel 11a can be lifted off the travel surface 99, thereby making it possible to move the transport vehicle 100 relatively easily by force applied by an operator or by force applied by another towing vehicle, for example.

The system for moving a disabled transport vehicle includes the transport vehicle 100 and auxiliary wheel units 20 (see FIG. 9) that are used when the transport vehicle 100 becomes disabled (or defective). In the present embodiment, as shown in FIG. 1, there are a plurality of transport vehicles 100, and when one of the transport vehicles 100 becomes disabled, the auxiliary wheel units 20 are used for the disabled transport vehicle 100.

As shown in FIG. 9, each of the auxiliary wheel units 20 includes a support frame 22, an auxiliary wheel 21 rotatably supported by the support frame 22, and a fixing device 90 that detachably fixes the support frame 22 to the vehicle body 10. The auxiliary wheel unit 20 (specifically, the support frame 22) is normally detached from the transport vehicle 100 and is attached to the vehicle body 10 only when the transport vehicle 100 becomes disabled. In the present embodiment, the auxiliary wheel 21 is supported by the support frame 22 so as not to be able to rotate around an axis along the vertical direction V (i.e., the direction along which the rotation axis of the auxiliary wheel 21 extends is fixed relative to the support frame 22), and the support frame 22 is fixed to the vehicle body 10 by the fixing device 90 such that the rotation axis of the auxiliary wheel 21 extends along the width direction W of the vehicle body.

As shown in FIG. 7, the support frame 22 has a support surface 23 that abuts against a bottom surface 17 of the vehicle body 10 from the below side V2, at a position on the above side V1 of the auxiliary wheel 21. In the present embodiment, the support frame 22 is attached to an attachment section 103 of the vehicle body 10. Therefore, the bottom surface 17 against which the support surface 23 of the support frame 22 abuts from the below side V2 is the bottom surface 17 of the attachment section 103. As shown in FIG. 9, the attachment section 103 is shaped as a plate extending along the horizontal plane. As shown in FIG. 7, in the present embodiment, the attachment section 103 is disposed on the first side L1 in the front-rear direction of the vehicle body relative to the upper surface section 101 and on the below side V2 of the upper surface section 101. In this example, the attachment section 103 is integrated with the upper surface section 101.

As shown in FIG. 6, the vehicle body 10 has the attachment section 103 on both sides in the width direction W of the vehicle body, and when the transport vehicle 100 becomes disabled, a pair of auxiliary wheel units 20 are used. In other words, when a malfunction of the transport vehicle 100 occurs, the auxiliary wheel units 20 (specifically, the support frames 22) are attached to the attachment sections 103 on both sides in the width direction W of the vehicle body. Note that FIG. 9 shows the auxiliary wheel unit 20 on the second side W2 in the width direction of the vehicle body out of the pair of auxiliary wheel units 20, but the auxiliary wheel unit 20 on the first side W1 in the width direction of the vehicle body has the same configuration as the auxiliary wheel unit 20 on the second side W2 in the width direction of the vehicle body, and is arranged in mirror image with the auxiliary wheel unit 20 on the second side W2 in the width direction of the vehicle body with respect to a plane orthogonal to the width direction W of the vehicle body.

As shown in FIG. 7, in the present embodiment, the fixing device 90 includes fixing bolts 91, female threaded fixing holes 92 provided in either the vehicle body 10 or the support frame 22, and fixing through holes 93 provided in the other one of the vehicle body 10 and the support frame 22. In the example shown in FIG. 7, the support frame 22 includes the female threaded fixing holes 92, and the vehicle body 10 includes the fixing through holes 93. Specifically, the female threaded fixing holes 92 are formed in the support frame 22 so as to be open at the upper surface of the support frame 22, and the fixing through holes 93 are formed so as to pass through the attachment section 103 of the vehicle body 10 in the vertical direction V. The support frame 22 is fixed to the vehicle body 10 (specifically, the attachment section 103) by passing the fixing bolts 91 (in this example, wing bolts) from the above side V1 through the fixing through holes 93 and screwing them into the female threaded fixing holes 92. In the example shown in FIG. 7, the fixing device 90 fixes the support frame 22 to the vehicle body 10 with the fixing bolts 91 at two locations in the front-rear direction L of the vehicle body.

As shown in FIG. 9, in the present embodiment, at least either the auxiliary wheel unit 20 or the vehicle body 10 includes a positioning mechanism P for positioning the support frame 22 at a predetermined position on the vehicle body 10. Here, the positioning mechanism P is configured such that when the support frame 22 is positioned on the vehicle body 10 by the positioning mechanism P, the female threaded fixing holes 92 and the fixing through holes 93 are coaxial with each other (see FIG. 7).

In the present embodiment, the system for moving a disabled transport vehicle includes, as the positioning mechanism P, engaging sections 24 provided on the support frame 22, and engaged sections 18 provided on the vehicle body 10 and configured to be engaged with the engaging sections 24. In other words, the positioning mechanism P is provided in both the auxiliary wheel unit 20 and the vehicle body 10. Specifically, the engaging sections 24 and the engaged sections 18 that configure the positioning mechanism P are distributed between the support frame 22 and the vehicle body 10. In the example shown in FIG. 9, the positioning mechanism P positions the support frame 22 relative to the vehicle body 10 by the engaging sections 24 engaging with the engaged sections 18 at two locations in the front-rear direction L of the vehicle body.

In the example shown in FIG. 9, each of the engaging sections 24 is constituted by the head of a bolt fixed to the support frame 22, and each of the engaged sections 18 is constituted by a notch formed in the vehicle body 10 (specifically, the attachment section 103). The bolt constituting the engaging section 24 is fixed to the support frame 22 such that the head of the bolt protrudes on the above side V1 of the support surface 23 (see FIG. 7). The notch constituting the engaged section 18 is formed by cutting out a part of the side surface of the attachment section 103 (in other words, a part of the outer edge of the attachment section 103 when viewed in the vertical direction V). In this example, the engaging section 24 is a protrusion and the engaged section 18 is a recession, but the engaging section 24 may be a recession and the engaged section 18 may be a protrusion.

As shown in FIG. 9, when the engaging sections 24 engage with the engaged sections 18 from one side in the width direction W of the vehicle body, the engaging sections 24 are positioned in the front-rear direction L of the vehicle body. Here, the engaging sections 24 are configured to engage with the engaged sections 18 from outward in the width direction W of the vehicle body. Therefore, the notches constituting the engaged sections 18 are formed by cutting out portions of the outer side surface of the attachment section 103 in the width direction W of the vehicle body. The outward side in the width direction W of the vehicle body is the side away from the center of the transport vehicle 100 in the width direction W of the vehicle body, and in the case of the auxiliary wheel unit 20 on the second side W2 in the width direction of the vehicle body shown in FIG. 9, the second side W2 in the width direction of the vehicle body is the outward side in the width direction W of the vehicle body.

When inserted into the notches constituting the engaged section 18, the engaging sections 24 are restricted from moving toward both sides in the front-rear direction L of the vehicle body by the notches, and are thereby positioned in the front-rear direction L of the vehicle body. Also, upon coming into contact with the notches constituting the engaged sections 18 from outward in the width direction W of the vehicle body, the engaging sections 24 are restricted from moving inward in the width direction W of the vehicle body (the direction opposite to outward in the width direction W of the vehicle body) by the notches, and are thereby positioned in the width direction W of the vehicle body. In this example, the support frame 22 can be attached to the vehicle body 10 from outward in the width direction W of the vehicle body. Therefore, for example, when the transport vehicle 100 is stopped on an inner route Ra due to a malfunction, a worker can crawl below (V2) the container shelf 8 and approach the transport vehicle 100 from outward in the width direction W of the vehicle body, and can therefore relatively easily attach the support frame 22 to the vehicle body 10.

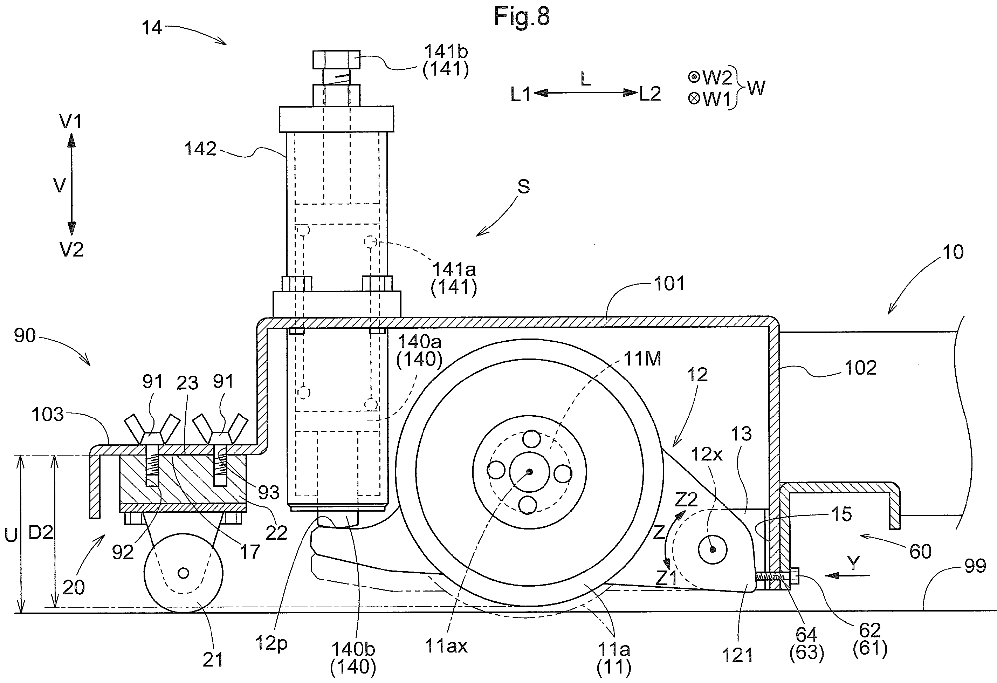

As shown in FIG. 8, the transport vehicle 100 includes a raising device 60 that raises the position of the drive wheels 11a relative to the vehicle body 10. In the present embodiment, the raising device 60 includes a pressing member 61 and a advancing and retracting mechanism 63. The pressing member 61 is a member that presses the support arm 12 in a direction of moving the drive wheel 11a toward the above side V1. In other words, the pressing member 61 presses the support arm 12 in a direction that causes the support arm 12 to swing toward the second side Z2 in the swing direction . The direction (vector) in which the pressing member 61 presses the support arm 12 is defined as a pressing direction Y, and the advancing and retracting mechanism 63 is a mechanism for moving the pressing member 61 forward and rearward in the pressing direction Y. In the present embodiment, the pressing direction Y is a direction parallel to the front-rear direction L of the vehicle body (here, a direction toward the first side L1 in the front-rear direction of the vehicle body).

By moving the pressing member 61 in the pressing direction Y using the advancing and retracting mechanism 63, the support arm 12 is pressed and the position of the drive wheel 11a relative to the vehicle body 10 can be raised, and by moving the pressing member 61 in the direction opposite to the pressing direction Y using the advancing and retracting mechanism 63, the position of the drive wheel 11a can be lowered relative to the vehicle body 10. FIG. 8 shows a state in which, by pressing the support arm 12 with the pressing member 61, the support arm 12 swings from the state shown by the two-dot chain line (the state before pressing by the pressing member 61) toward the second side Z2 in the swing direction, and the position of the drive wheel 11a relative to the vehicle body 10 is raised compared to the state before pressing by the pressing member 61. In order to raise the position of the drive wheel 11a relative to the vehicle body 10, it is necessary to swing the support arm 12 toward the second side Z2 in the swing direction against the biasing force of the elastic unit 14. In order to reduce the pressing force required to swing the support arm 12 toward the second side Z2 in the swing direction, the position of the drive wheel 11a relative to the vehicle body 10 may be raised while the biasing force applied by the elastic unit 14 to the support arm 12 is reduced or while the elastic unit 14 is not applying the biasing force to the support arm 12. For example, the position of the drive wheel 11a relative to the vehicle body 10 may be raised in a state where adjustment is performed by the adjustment section 141b such that the elastic force of the elastic section 141 (specifically, the spring member 141a) is reduced.

In the example shown in FIG. 8, the pressing member 61 is a pressing bolt 62, and the advancing and retracting mechanism 63 includes a female threaded pressing hole 64 into which the pressing bolt 62 is screwed. The position of the female threaded pressing hole 64 relative to the vehicle body 10 is fixed. The raising device 60 is configured such that, by rotating the pressing bolt 62 screwed into the female threaded pressing hole 64, the pressing bolt 62 presses a portion of the support arm 12 on the side of the swing pivot 12x opposite to the drive wheel 11a, thereby applying a moment to the support arm 12 in the direction of moving the drive wheel 11a toward the above side V1. In the example shown in FIG. 8, the pressing bolt 62 is configured to press the pressing portion 121, which is a portion of the support arm 12 on the second side L2 in the front-rear direction of the vehicle body and on the below side V2 relative to the swing pivot 12x, from the second side L2 in the front-rear direction of the vehicle body. The head of the pressing bolt 62 is disposed on the second side L2 in the front-rear direction of the vehicle body relative to the female threaded pressing hole 64, and an operator can rotate the pressing bolt 62 from the second side L2 in the front-rear direction of the vehicle body.

As shown in FIG. 8, in this example, the female threaded pressing hole 64 or a hole in communication with the female threaded pressing hole 64 is provided so as to pass through the stopper 15. Here, the hole in communication with the female threaded pressing hole 64 is a through hole through which the pressing bolt 62 is inserted. In this example, the female threaded pressing hole 64 is provided so as to pass through the stopper 15. An end portion of the pressing bolt 62 is configured to protrude toward the support arm 12 relative to the stopper 15 and press the support arm 12. Here, the end portion of the pressing bolt 62 on the first side L1 in the front-rear direction of the vehicle body is configured to protrude toward the first side L1 in the front-rear direction of the vehicle body relative to the stopper 15 and press the support arm 12 (specifically, the pressing portion 121).

In the example shown in FIG. 8, a hole (through hole) in communication with the female threaded pressing hole 64 is formed in a member fixed to the hanging wall section 102 on the second side L2 in the front-rear direction of the vehicle body, and the pressing bolt 62 is inserted into the hole and screwed into the female threaded pressing hole 64. As an alternative to this configuration, for example, the female threaded pressing hole 64 may be formed in a member fixed to the hanging wall section 102 on the second side L2 in the front-rear direction of the vehicle body, and a hole in communication with the female threaded pressing hole 64 may be formed to pass through the stopper 15. Furthermore, in the case where the female threaded pressing hole 64 is provided so as to pass through the stopper 15, a configuration may be adopted in which a hole in communication with the female threaded pressing hole 64 is not formed (e.g., in the example shown in FIG. 8, a configuration in which there is no member fixed to the hanging wall section 102 on the second side L2 in the front-rear direction of the vehicle body).

FIG. 7 shows a normal ground-contact state in which the position of the drive wheel 11a has not been raised by the raising device 60. In FIG. 7, a unit dimension U is the dimension of the auxiliary wheel unit 20 in the vertical direction V, specifically, the dimension in the vertical direction V between the support surface 23 and the lower end of the auxiliary wheel 21. Also, in FIG. 7, a first distance D1 is the distance in the vertical direction V between the bottom surface 17 of the vehicle body 10 (here, the bottom surface 17 of the attachment section 103, which similarly applies below) and the travel surface 99 in the normal ground-contact state in which the position of the drive wheel 11a has not been raised by the raising device 60. In the present embodiment, the normal ground-contact state is defined as a state in which the transport vehicle 100 (a transport vehicle 100 that is not disabled) is placed on the travel surface 99 as designed. Therefore, the first distance D1 is the distance in the vertical direction V between the bottom surface 17 of the vehicle body 10 and the travel surface 99, as designed.

On the other hand, FIG. 8 shows a drive wheel raised state in which the drive wheel 11a has been raised by the raising device 60 while the auxiliary wheel unit 20 is attached to the vehicle body 10. In FIG. 8, the distance in the vertical direction V between the bottom surface 17 of the vehicle body 10 and the lower end of the drive wheel 11a in the drive wheel raised state is defined as a second distance D2. If the auxiliary wheel unit 20 were not attached to the vehicle body 10 in the state shown in FIG. 8, the vehicle body 10 would flex and deform due to the weight of the transport vehicle 100, and the drive wheels 11a would come into contact with the travel surface 99. Therefore, the second distance D2 is the distance in the vertical direction V between the bottom surface 17 of the vehicle body 10 and the travel surface 99 in the raised state in which the position of the drive wheel 11a has been raised by the raising device 60 while the auxiliary wheel unit 20 has been removed from the vehicle body 10.

As shown in FIGS. 7 and 8, the unit dimension U is smaller than the first distance D1 and larger than the second distance D2. Also, the second distance D2 changes depending on the amount by which the position of the drive wheel 11a is raised by the raising device 60, and when the raising device 60 raises the position of the drive wheel 11a to the maximum height within the raising range, the second distance D2 is the minimum value. The unit dimension U is at least greater than the minimum value of the second distance D2. Since the unit dimension U is smaller than the first distance D1, as shown in FIG. 7, the support frame 22 that supports the auxiliary wheel 21 can basically be attached to the vehicle body 10 without lifting up the vehicle body 10 using an elevation device 98 (see FIG. 10) such as a jack. Furthermore, since the unit dimension U is larger than the second distance D2, by raising the position of the drive wheel 11a using the raising device 60 while the auxiliary wheel unit 20 is attached to the vehicle body 10, it is possible to achieve a state in which the drive wheel 11a is lifted off the travel surface 99 and the auxiliary wheel 21 is in contact with the travel surface 99 (the drive wheel raised state shown in FIG. 8). As a result, even if the drive wheel 11a cannot rotate due to a malfunction of the transport vehicle 100, or if a large force is required to rotate the drive wheel 11a, by lifting up the drive wheel 11a, the transport vehicle 100 can be moved relatively easily using force applied by an operator or force applied by another towing vehicle, for example.

Note that the distance in the vertical direction V between the bottom surface 17 of the vehicle body 10 and the travel surface 99 can vary from the first distance D1, which is the design value of the distance, depending on the condition of the travel surface 99, such as unevenness in the surface. The distance in the vertical direction V between the bottom surface 17 of the vehicle body 10 and the travel surface 99 can also vary from the first distance D1 depending on the loading state of the containers 70 on the transport vehicle 100 (i.e., changes in the total weight of the transport vehicle 100). Only in the case where the distance in the vertical direction V between the bottom surface 17 of the vehicle body 10 of the disabled transport vehicle 100 and the travel surface 99 is smaller than the unit dimension U, the vehicle body 10 can be lifted by the elevation device 98 and the auxiliary wheel unit 20 can be attached to the vehicle body 10, but the system for moving a disabled transport vehicle can also be configured to include a plurality of types of auxiliary wheel units 20 that have different unit dimensions U. Note that the unit dimension U of each type of auxiliary wheel unit 20 is set to be smaller than the first distance D1. In this way, in the case where the system for moving a disabled transport vehicle includes a plurality of types of auxiliary wheel units 20 having different unit dimensions U, an appropriate auxiliary wheel unit 20 (specifically, an auxiliary wheel unit 20 having a unit dimension U smaller than the distance in the vertical direction V between the bottom surface 17 of the vehicle body 10 of the disabled transport vehicle 100 and the travel surface 99) can be selected and used.

Also, taking into consideration that the distance in the vertical direction V between the bottom surface 17 of the vehicle body 10 and the travel surface 99 can vary as described above, a configuration such as the following may be adopted. Specifically, the normal ground-contact state can be defined as a state in which, while the position of the drive wheel 11a is not raised by the raising device 60, the distance in the vertical direction V between the bottom surface 17 of the vehicle body 10 and the travel surface 99 is the minimum value within the variation range of the distance, and the first distance D1 can be defined as the distance in the vertical direction V between the bottom surface 17 of the vehicle body 10 and the travel surface 99 in such a normal ground-contact state. In this case, even if the system for moving a disabled transport vehicle does not include a plurality of types of auxiliary wheel units 20 having different unit dimensions U, the distance in the vertical direction V between the bottom surface 17 of the vehicle body 10 of the disabled transport vehicle 100 and the travel surface 99 can basically be prevented from becoming smaller than the unit dimension U.

### Other Embodiments

(1) In the above embodiment, an example of a configuration has been described in which the end portion of the pressing bolt 62 can protrude toward the support arm 12 relative to the stopper 15 and press the support arm 12. However, the present disclosure is not limited to such a configuration, and for example, a configuration is possible in which the end portion of the pressing bolt 62 can protrude toward the support arm 12 relative to a portion of the hanging wall section 102 that does not function as the stopper 15, and press the support arm 12. In this case, the female threaded pressing hole 64 is provided, for example, so as to pass through a portion of the hanging wall section 102 that does not function as the stopper 15.
(2) In the above embodiment, an example of a configuration has been described in which the raising device 60 includes the pressing member 61 and the advancing and retracting mechanism 63 that moves the pressing member 61 forward and rearward in the pressing direction Y. However, the present disclosure is not limited to such a configuration, and a configuration is possible in which, for example, the raising device 60 includes a lever member supported by the vehicle body 10 so as to be swingable around an axis along the width direction W of the vehicle body, and a swinging mechanism for swinging the lever member (e.g., a link mechanism for swinging the lever member using the principle of leverage), and with this configuration, by swinging the lever member to one side in the swinging direction with the swinging mechanism, the leading end of the lever member presses the support arm 12 (e.g., the pressing portion 121), and applies a moment to the support arm 12 in the direction of moving the drive wheel 11a toward the above side V1.
(3) In the above embodiment, an example of a configuration has been described in which the female threaded fixing holes 92 are provided in the support frame 22, and the fixing through holes 93 are provided in the vehicle body 10. However, the present disclosure is not limited to such a configuration, and a configuration is possible in which the female threaded fixing holes 92 are provided in the vehicle body 10 (e.g., the attachment section 103) and the fixing through holes 93 are provided in the support frame 22. In this case, for example, the support frame 22 can be fixed to the vehicle body 10 by passing the fixing bolts 91 through the fixing through holes 93 from the below side V2 and screwing them into the female threaded fixing holes 92.
(4) In the above embodiment, an example of a configuration has been described in which the fixing device 90 includes the fixing bolts 91, the female threaded fixing holes 92, and the fixing through holes 93. However, the present disclosure is not limited to such a configuration, and for example, a configuration is possible in which the fixing device 90 includes a clamp mechanism that clamps the vehicle body 10 (e.g., the attachment section 103), as a mechanism for removably fixing the support frame 22 to the vehicle body 10.
(5) Also, the configurations disclosed in each of the above-mentioned embodiments may be applied in combination with configurations disclosed in other embodiments (including combinations of the embodiments described as other embodiments) as long as no contradiction arises. Regarding such other configurations as well, the embodiments disclosed in this specification are merely examples in all respects. Therefore, various modifications can be made as appropriate within the scope of the present disclosure.

### Overview of Embodiments

The following describes an overview of the system for moving a disabled transport vehicle described above.

A system for moving a disabled transport vehicle, including: a transport vehicle configured to travel on a travel surface and transport an article; and at least one auxiliary wheel unit configured to be used in a case where the transport vehicle becomes disabled, the transport vehicle including: a vehicle body; and a plurality of wheels configured to roll on the travel surface while supporting the vehicle body, at least one of the plurality of wheels being a drive wheel coupled to a drive shaft of a drive motor in such a manner as to rotate in conjunction with the drive shaft, the drive wheel being attached to the vehicle body via a suspension mechanism, the transport vehicle further including a raising device configured to raise a position of the drive wheel relative to the vehicle body, the at least one auxiliary wheel unit including: a support frame; an auxiliary wheel held by the support frame and rotatable relative to the support frame; and a fixing device configured to fix the support frame to the vehicle body in such a manner that the support frame is detachable from the body, the support frame including a support surface at a position above the auxiliary wheel, the support surface being configured to come into contact with a bottom surface of the vehicle body from below, and the support surface and a lower end of the auxiliary wheel being separated by a vertical dimension that is (i) smaller than a vertical distance between the bottom surface of the vehicle body and the travel surface with the drive wheel in a normal ground-contact state in which the position of the drive wheel is not raised by the raising device and (ii) greater than a vertical distance between the bottom surface of the vehicle body and the travel surface with the drive wheel in a raised state in which the at least one auxiliary wheel unit has been detached from the vehicle body and the position of the drive wheel is raised by the raising device.

With this configuration, even if the transport vehicle becomes unable to travel due to a malfunction of the drive motor or the like, the support frame having the support surface that abuts against the bottom surface of the vehicle body from below can be fixed to the vehicle body by the fixing device, and by raising the position of the drive wheel relative to the vehicle body with the raising device, it is possible to realize a state in which the drive wheel is lifted up from the travel surface and the auxiliary wheel held by the support frame is in contact with the ground. Therefore, even if the drive wheel cannot rotate due to a malfunction of the drive motor or the like, or if a large force is required to rotate the drive wheel, the drive wheel can be lifted up, thereby making it possible to move the transport vehicle relatively easily by force applied by an operator or by force applied by another towing vehicle, for example. Since it is possible to move the disabled transport vehicle in this manner, when there are a plurality of transport vehicles, it is possible to avoid the case where the disabled transport vehicle hinders the traveling of the other transport vehicles. Furthermore, with this configuration, the vertical dimension between the support surface of the support frame and the lower end of the auxiliary wheel is smaller than the vertical distance between the bottom surface of the vehicle body and the travel surface in the normal ground-contact state, and therefore the support frame that supports the auxiliary wheel can basically be attached to the vehicle body without lifting up the vehicle body with a jack or the like. Therefore, the support frame can be easily attached to the vehicle body.

Furthermore, according to the above configuration, the support frame can be attached to and detached from the vehicle body, and therefore the support frame that supports the auxiliary wheel may be attached to the transport vehicle only when the transport vehicle becomes disabled. Therefore, even if there are a plurality of transport vehicles, it is basically sufficient to provide the facility with fewer auxiliary wheel units than the number of transport vehicles, and the equipment cost can be lower than in the case where auxiliary wheels are attached to all transport vehicles in advance.

As described above, according to the above configuration, it is possible to realize a system that is capable of moving a disabled transport vehicle while also suppressing an increase in the equipment cost.

Here, it is preferable that the suspension mechanism includes: a support arm swingable relative to the vehicle body and configured to support the drive wheel; a swing support section attached to the vehicle body and supporting a swing pivot of the support arm; and an elastic unit configured to apply, to the support arm, a biasing force in such a direction as to move the drive wheel downward, and the raising device includes: a pressing member configured to press the support arm in such a direction as to move the drive wheel upward; and an advancing and retracting mechanism configured to advance and retract the pressing member in a pressing direction in which the pressing member presses the support arm.

According to this configuration, by moving the pressing member in the pressing direction using the advancing and retracting mechanism, the pressing member can press the support arm to raise the position of the drive wheel relative to the vehicle body, and by moving the pressing member in the direction opposite to the pressing direction using the advancing and retracting mechanism, the position of the drive wheel relative to the vehicle body can be lowered. Therefore, it is possible to appropriately configure the raising device that raises the position of the drive wheel relative to the vehicle body as required.

In the above configuration, it is preferable that the pressing member is a pressing bolt, the advancing and retracting mechanism includes a female threaded pressing hole at a fixed position relative to the vehicle body, the pressing bolt being screwable into the female threaded pressing hole, and in response to rotation of the pressing bolt screwed in the female threaded pressing hole, the pressing bolt presses a portion of the support arm which portion is opposite to the drive wheel across the swing pivot, and applies a moment to the support arm in such a direction as to move the drive wheel upward.

According to this configuration, by simply rotating the pressing bolt screwed into the female threaded pressing hole, it is possible to press the support arm in a direction that moves the drive wheel upward. Therefore, a large force is not required to press the support arm, and the position of the drive wheel relative to the vehicle body can be easily raised using the raising device.

In the above configuration, it is preferable that the suspension mechanism includes a stopper at a fixed position relative to the vehicle body and configured to prevent the support arm from swinging past a predetermined position in such a direction as to move the drive wheel downward, the female threaded pressing hole or a hole connected to the female threaded pressing hole passes through the stopper, and the pressing bolt has an end portion configured to protrude toward the support arm relative to the stopper and press the support arm.

According to this configuration, when the vehicle body is lifted with a jack or the like, the swinging of the support arm is restricted by the stopper, thereby preventing the drive wheel and the support arm from hanging down a large amount. Also, according to this configuration, the pressing bolt screwed into the female threaded pressing hole can pass through the stopper, and the end portion of the pressing bolt can protrude toward the support arm relative to the stopper and press the support arm. Therefore, it is easy to realize a mechanism that can appropriately press the support arm while keeping the amount of protrusion of the pressing bolt in the pressing direction small.

In the above configuration, it is preferable that at least one of the at least one auxiliary wheel unit and the vehicle body includes a positioning mechanism configured to position the support frame at a predetermined position on the vehicle body.

According to this configuration, the support frame can be easily fixed at a predetermined position on the vehicle body.

In the above configuration, it is preferable that the positioning mechanism includes an engaging section provided on the support frame, and an engageable section provided on the vehicle body and configured to be engaged with the engaging section, and the engaging section is configured to become positioned in a front-rear direction of the vehicle body in response to engaging with the engageable section from one side in a width direction of the vehicle body, the front-rear direction of the vehicle body being a direction in which the transport vehicle travels, and the width direction of the vehicle body being a direction orthogonal to the front-rear direction of the vehicle body in a view vertically.

According to this configuration, the support frame can be easily positioned when attaching the support frame to the vehicle body from one side in the width direction of the vehicle body. Therefore, even if the direction in which an operator can approach the disabled transport vehicle is limited to the width direction of the vehicle body, the support frame can be attached easily.

In the above configuration, it is preferable that the fixing device includes: a fixing bolt; a female threaded fixing hole in a first one of the vehicle body and the support frame; and a fixing through hole in a second one of the vehicle body and the support frame, and the female threaded fixing hole and the fixing through hole are coaxial with each other in a state in which the support frame is positioned relative to the vehicle body by the positioning mechanism.

According to this configuration, while the support frame is positioned on the vehicle body, the support frame can be fixed to the vehicle body by passing the fixing bolt through the fixing through hole and screwing it into the female threaded fixing hole. Therefore, the support frame can be easily fixed to the vehicle body by the fixing device.

In the above configuration, it is preferable that the at least one auxiliary wheel unit includes a plurality of auxiliary wheel units different from each other in the vertical dimension between the support surface and the lower end of the auxiliary wheel.

According to this configuration, an appropriate unit can be selected and used even when, for example, the vertical distance between the bottom surface of the vehicle body and the travel surface varies depending on the condition of the travel surface, such as unevenness, or when the vertical distance between the bottom surface of the vehicle body and the travel surface varies depending on the loading state of articles on the transport vehicle (i.e., changes in the total weight of the transport vehicle).

The system for moving a disabled transport vehicle according to the present disclosure need only be able to achieve at least one of the effects described above.

### Description of Reference Signs

- 10: Vehicle body
- 11: Wheel
- 11M: Drive motor
- 11a: Drive wheel
- 12: Support arm
- 12x: Swing pivot
- 13: Swing support section
- 14: Elastic unit
- 15: Stopper
- 16: Drive shaft
- 17: Bottom surface
- 18: Engaged section
- 20: Auxiliary wheel unit
- 21: Auxiliary wheel
- 22: Support frame
- 23: Support surface
- 24: Engaging section
- 60: Raising device
- 61: Pressing member
- 62: Pressing bolt
- 63: Retraction mechanism
- 64: Female threaded pressing hole
- 70: Container (article)
- 90: Fixing device
- 91: Fixing bolt
- 92: Female threaded fixing hole
- 93: Fixing through hole
- 99: Travel surface
- 100: Transport vehicle
- D1: First distance (distance in vertical direction between travel surface and bottom surface of vehicle body in normal ground-contact state)
- D2: Second distance (distance in vertical direction between travel surface and bottom surface of vehicle body in raised state)
- L: Front-rear direction of vehicle body
- P: Positioning mechanism
- S: Suspension mechanism
- U: Unit dimension (dimension in vertical direction between support surface and lower end of auxiliary wheel)
- V: Vertical direction
- V1: Above side
- V2: Below side
- W: Width direction of vehicle body
- Y: Pressing direction

## Claims

1. A system for moving a disabled transport vehicle, comprising:
a transport vehicle configured to travel on a travel surface and transport an article; and
at least one auxiliary wheel unit configured to be used in a case where the transport vehicle becomes disabled,
the transport vehicle including:
a vehicle body; and
a plurality of wheels configured to roll on the travel surface while supporting the vehicle body,
at least one of the plurality of wheels being a drive wheel coupled to a drive shaft of a drive motor in such a manner as to rotate in conjunction with the drive shaft,
the drive wheel being attached to the vehicle body via a suspension mechanism,
the transport vehicle further including a raising device configured to raise a position of the drive wheel relative to the vehicle body,
the at least one auxiliary wheel unit including:
a support frame;
an auxiliary wheel held by the support frame and rotatable relative to the support frame; and
a fixing device configured to fix the support frame to the vehicle body in such a manner that the support frame is detachable from the body,
the support frame including a support surface at a position above the auxiliary wheel, the support surface being configured to come into contact with a bottom surface of the vehicle body from below, and
the support surface and a lower end of the auxiliary wheel being separated by a vertical dimension that is (i) smaller than a vertical distance between the bottom surface of the vehicle body and the travel surface with the drive wheel in a normal ground-contact state in which the position of the drive wheel is not raised by the raising device and (ii) greater than a vertical distance between the bottom surface of the vehicle body and the travel surface with the drive wheel in a raised state in which the auxiliary wheel unit has been detached from the vehicle body and the position of the drive wheel is raised by the raising device.

2. The system for moving a disabled transport vehicle according to claim 1,
wherein the suspension mechanism includes:
a support arm swingable relative to the vehicle body and configured to support the drive wheel;
a swing support section attached to the vehicle body and supporting a swing pivot of the support arm; and
an elastic unit configured to apply, to the support arm, a biasing force in such a direction as to move the drive wheel downward, and
the raising device includes:
a pressing member configured to press the support arm in such a direction as to move the drive wheel upward; and
an advancing and retracting mechanism configured to advance and retract the pressing member in a pressing direction in which the pressing member presses the support arm.

3. The system for moving a disabled transport vehicle according to claim 2,
wherein the pressing member is a pressing bolt,
the advancing and retracting mechanism includes a female threaded pressing hole at a fixed position relative to the vehicle body, the pressing bolt being screwable into the female threaded pressing hole, and
in response to rotation of the pressing bolt screwed in the female threaded pressing hole, the pressing bolt presses a portion of the support arm which portion is opposite to the drive wheel across the swing pivot to apply a moment to the support arm in such a direction as to move the drive wheel upward.

4. The system for moving a disabled transport vehicle according to claim 3,
wherein the suspension mechanism includes a stopper at a fixed position relative to the vehicle body and configured to prevent the support arm from swinging past a predetermined position in such a direction as to move the drive wheel downward,
the female threaded pressing hole or a hole connected to the female threaded pressing hole passes through the stopper, and
the pressing bolt has an end portion configured to protrude toward the support arm relative to the stopper to press the support arm.

5. The system for moving a disabled transport vehicle according to any one of claims 1 to 4,
wherein at least one of the at least one auxiliary wheel unit and the vehicle body includes a positioning mechanism configured to position the support frame at a predetermined position on the vehicle body.

6. The system for moving a disabled transport vehicle according to claim 5,
wherein the positioning mechanism includes an engaging section provided on the support frame, and an engageable section provided on the vehicle body and configured to be engaged with the engaging section, and
the engaging section is configured to become positioned in a front-rear direction of the vehicle body in response to engaging with the engageable section from one side in a width direction of the vehicle body, the front-rear direction of the vehicle body being a direction in which the transport vehicle travels, and the width direction of the vehicle body being a direction orthogonal to the front-rear direction of the vehicle body in a view vertically.

7. The system for moving a disabled transport vehicle according to claim 5,
wherein the fixing device includes:
a fixing bolt;
a female threaded fixing hole in a first one of the vehicle body and the support frame; and
a fixing through hole in a second one of the vehicle body and the support frame, and
the female threaded fixing hole and the fixing through hole are coaxial with each other in a state in which the support frame is positioned relative to the vehicle body by the positioning mechanism.

8. The system for moving a disabled transport vehicle according to any one of claims 1 to 4,
wherein the at least one auxiliary wheel unit includes a plurality of auxiliary wheel units different from each other in the vertical dimension between the support surface and the lower end of the auxiliary wheel.
